# EUROPEAN PATENT APPLICATION

(11) **EP 4 685 034 A1**
(43) Date of publication of application: **28.01.2026**
(21) Application number: 23928348.4
(22) Date of filing: 31.10.2023
(51) Int. Cl.: B62D 5/04, B62D 21/02, B62D 21/15

(54) **STEERING GEAR SHELL, AUTOMOBILE STEERING GEAR, FRONT SUBFRAME, AND AUTOMOBILE**

(30) Priority: 21.03.2023 CN 202310277266
(71) Applicant: Chongqing Changan Automobile Co., Ltd., Chongqing 400023 (CN)
(72) Inventor: ZHANG, Dalei, Chongqing 400023 (CN); WANG, Zhengang, Chongqing 400023 (CN); LUAN, Aidong, Chongqing 400023 (CN); LUO, Jiawei, Chongqing 400023 (CN)
(74) Representative: Müller Schupfner & Partner Patent- und Rechtsanwaltspartnerschaft mbB (Hamburg)
(86) International application number: PCT/CN2023/128923
(87) International publication number: WO 2024/193044

(57) **Abstract**

Disclosed is a steering gear shell, comprising a main body (1). Both ends of the main body are provided with shell mounting seats (11), wedges (10) are fixedly arranged on the sides of the shell mounting seats facing a front cross beam (31), and the upper end surfaces of the wedges incline upwards from front to back. The steering gear shell can change the transmission direction of the collision force, thereby reducing the injury to a person caused by collision. Also disclosed are an automobile steering gear comprising the steering gear shell, a front subframe, and an automobile.

## Description

### Field of the Invention

The present disclosure relates to the technical field of automobile parts, and specifically to a steering gear housing, an automobile steering gear, a front subframe, and an automobile.

### Background of the Invention

A power steering gear provides steering assistance. An upper part of the power steering gear is connected to an intermediate steering shaft, a steering column, and a steering wheel, while a lower part of the power steering gear is connected to a steering knuckle and wheels. When a driver manually operates the steering wheel, the power steering gear provides steering assistance, which is then transmitted to the steering knuckle and a vehicle via an outer tie rod end of the power steering gear, thereby achieving the steering of the vehicle. The power steering gear is capable of providing substantial steering assistance. The power steering gear of the present disclosure can provide a rack force of more than 16 kN, thereby meeting steering assistance requirements of mid-to-high-end vehicles and new energy vehicles.

For front-mounted trapezoidal steering gear layouts, after a vehicle collision occurs, the steering gear is subjected to significant impact forces, which are transmitted entirely rearward. This results in a great risk of injury to occupants and such a layout consequently fails to meet requirements of star ratings for crash protection.

### Summary of the Invention

An objective of the present disclosure is to provide a steering gear housing, an automobile steering gear, a front subframe, and an automobile, to change a transmission direction of a collision force and to mitigate occupant injuries resulting from vehicle collisions.

To achieve the above technical objective, the present disclosure adopts the following technical solutions.

A steering gear housing includes a main body. Both ends of the main body are provided with housing mounting bases, a wedge block is fixedly arranged on a side of each housing mounting base facing a front crossbeam, and an upper end surface of the wedge block inclines upwards from front to rear.

Further, a first mounting point is formed between the housing mounting base and the wedge block, and a second mounting point is formed at an end of the housing mounting base away from the wedge block. Such a structural design enhances the stability of the connection between the main body and longitudinal beams of a front subframe by providing the front and rear mounting points on the housing mounting base. Moreover, after the longitudinal beams fracture, the main body can move together with middle segments of the longitudinal beams, thereby offering improved practicality.

Further, the main body includes a manual side housing and a power assist-side housing, an electric motor mounting base is fixedly arranged on a side of the manual side housing close to the power assist-side housing, the power assist-side housing is detachably mounted on the electric motor mounting base, one of the housing mounting bases is located on the manual side housing, and the other of the housing mounting bases is located on the power assist-side housing. With such a structural design, the manual side housing and the power assist-side housing jointly form the main body. Through the cooperation between the electric motor mounting base and the power assist-side housing, mounting positions are reserved for an electric motor, a ball nut, a pulley, and a belt, thereby offering improved practicality.

The present disclosure further discloses an automobile steering gear, including the steering gear housing described above.

Further, the automobile steering gear includes an electric motor. A shaft hole is formed in the electric motor mounting base, the electric motor is mounted on the electric motor mounting base, a power output shaft of the electric motor passes through the shaft hole and is mounted with a pulley, a ball screw passes through the manual side housing, a ball nut is threaded onto the ball screw, a belt is wound between the pulley and the ball nut, and the ball nut, the pulley, and the belt are all located within the power assist-side shell.

Further, balls are arranged between the ball screw and the ball nut, and the ball screw, the ball nut, and the balls form a ball screw nut assembly. Such a structural design helps reduce friction between the ball screw and the ball nut, thereby offering improved practicality.

Further, the power output shaft of the electric motor is connected to the pulley via a spline. Such a structural design provides structural simplicity and facilitates ease of mounting.

Further, a sensor mounting base is fixedly arranged on the manual side housing, a sensor for detecting a driver steering signal is mounted on the sensor mounting base, and a sensor wire harness for signal transmission is mounted between the sensor and the electric motor.

The present disclosure further discloses a front subframe, including the steering gear housing described above.

Further, the front subframe includes a frame body. The frame body includes a front crossbeam, a rear crossbeam, and two longitudinal beams. Each longitudinal beam sequentially includes a front segment, a middle segment, and a rear beam from front to rear, the front segment, the middle segment, and the rear beam are integrally formed, a pre-weakened front section is arranged between the front segment and the middle segment, a pre-weakened rear section is arranged between the middle segment and the rear beam, the housing mounting base is mounted on the middle segment, and a front end of the wedge block abuts against the pre-weakened front section. With such a structural design, the front end of the wedge block abuts against the pre-weakened front section, and the rearward movement of the front segment of the longitudinal beam is guided by the wedge block, thereby promoting the preferential fracture of the longitudinal beam at the pre-weakened front section, and achieving improved practicality.

Further, a middle crossbeam is mounted between the two middle segments. With such a structural design, a connection strength between middle segments of the two longitudinal beams can be enhanced by the middle crossbeam, thereby offering improved practicality.

The present disclosure further discloses an automobile, including the front subframe described above.

By adopting the above technical solutions, the present disclosure has the following advantages.
1. The wedge block which has the front-to-rear upward-inclined upper end surface is fixedly arranged on a side, facing the front crossbeam, of each housing mounting base at each end of the steering gear housing, guides the front segment of the longitudinal beam after the front subframe is subjected to a collision and the longitudinal beam is fractured into the front segment, the middle segment, and the rear segment to change the movement directions of the front segment of the longitudinal beam and the front crossbeam from the original direct rearward transmission to an upward-rearward movement after impacting the wedge block, thereby avoiding the issue of the entire collision force being transmitted rearward, which may otherwise cause significant injury to the occupant and fail to meet requirements of star ratings for crash protection.
2. The stability of the connection between the main body and the longitudinal beams of the front subframe is enhanced by providing the front and rear mounting points on the housing mounting base. Moreover, after the longitudinal beams fracture, the main body can move together with the middle segments of the longitudinal beams, thereby offering improved practicality.
3. The front end of the wedge block abuts against the pre-weakened front section, and the rearward movement of the front segment of the longitudinal beam is guided by the wedge block, thereby promoting the preferential fracture of the longitudinal beam at the pre-weakened front section, and achieving improved practicality.
4. The connection strength between the middle segments of the two longitudinal beams can be enhanced by the middle crossbeam.

### Brief Description of the Drawings

The present disclosure may be further illustrated with reference to non-limiting embodiments shown in the accompanying drawings.
Fig. 1 is a schematic structural diagram of a steering gear housing in embodiments of a steering gear housing, an automobile steering gear, a front subframe and an automobile of the present disclosure;
Fig. 2 is a sectional structural diagram of a steering gear housing in embodiments of a steering gear housing, an automobile steering gear, a front subframe and an automobile of the present disclosure;
Fig. 3 is a schematic structural diagram of a power assist-side housing in embodiments of a steering gear housing, an automobile steering gear, a front subframe and an automobile of the present disclosure;
Fig. 4 is a schematic structural diagram of an automobile steering gear in embodiments of a steering gear housing, an automobile steering gear, a front subframe and an automobile of the present disclosure;
Fig. 5 is a schematic structural diagram of an automobile steering gear with a power assist-side housing removed in embodiments of a steering gear housing, an automobile steering gear, a front subframe and an automobile of the present disclosure;
Fig. 6 is a schematic structural diagram of an automobile steering gear and a front subframe in embodiments of a steering gear housing, an automobile steering gear, a front subframe and an automobile of the present disclosure; and
descriptions of reference numerals of main components are as follows:
1: main body; 11: housing mounting base; 10: wedge block;
121: first mounting point; 122: second mounting point; 13: manual side housing;
14: sensor mounting base; 140: sensor; 141: sensor wire harness;
2: power assist-side housing; 21: motor mounting base; 211: shaft hole;
3: frame body; 31: front crossbeam; 32: rear crossbeam;
33: longitudinal beam; 331: front segment; 3310: pre-weakened front section; 332: middle segment; 333: rear beam; 3330: pre-weakened rear section;
34: middle crossbeam;
4: electric motor; 40: ball screw; 41: ball nut; 42: pulley; and 43: belt;
51: mechanism mounting base; 52: adjustment mechanism; 53: mounting cover; 54: outer tie rod end; and 55: bellows dust boot

### Detailed Description of the Embodiments

The present disclosure will be explained in detail with reference to the accompanying drawings and specific embodiments. It should be noted that in the accompanying drawings or descriptions, similar or identical parts all use the same reference numerals, and the implementations not shown or described in the accompanying drawings are known to ordinary technicians in the related art. In the description of the present disclosure, directional terms such as "upper", "lower", "top", "bottom", "left", "right", "front", and "rear" used in the embodiments are intended only for reference to the orientation shown in the accompanying drawings, and shall not be construed as limiting the scope of protection of the present disclosure.

### Embodiment 1:

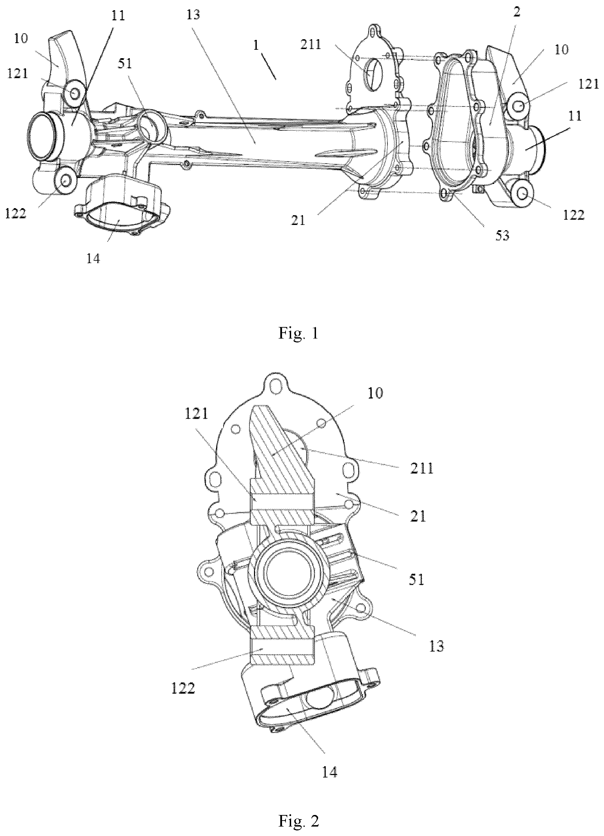

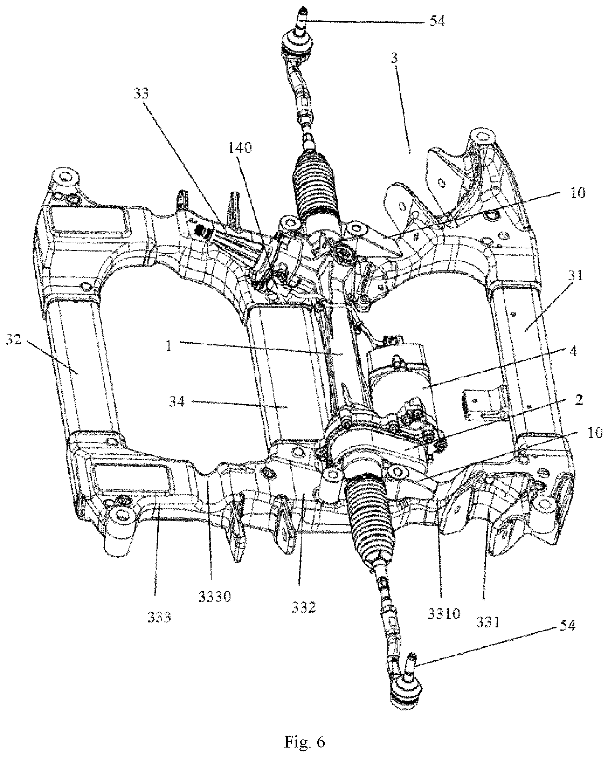

As shown in Fig. 1, Fig. 2, and Fig. 6, a steering gear housing of the present disclosure includes a main body 1, wherein both ends of the main body 1 are provided with housing mounting bases 11, a wedge block 10 is fixedly arranged on a side of each housing mounting base 11 facing a front crossbeam 31, and an upper end surface of the wedge block 10 inclines upwards from front to rear.

In the present embodiment, upon a collision, the front crossbeam 31 of a front subframe is driven to move rearward, thereby applying a compressive force to the longitudinal beam 33. As a result, the longitudinal beam 33 fractures at a pre-weakened front section 3310 and a pre-weakened rear section 3330, forming a front segment 331, a middle segment 332, and a rear beam 333. The middle segment 332 drives the steering gear housing to move downward, while the front crossbeam 31 drives the two front segments 331 to move rearward until fracture surfaces of the front segments 331 abut against the wedge block 10. The front segments 331 then slide rearward and upward along an inclined upper end surface of the wedge block 10.

Embodiment 2:

As shown in Fig. 1, Fig. 2, and Fig. 6, a steering gear housing of the present disclosure includes a main body 1, wherein both ends of the main body 1 are provided with housing mounting bases 11, a wedge block 10 is fixedly arranged on a side of each housing mounting base 11 facing a front crossbeam 31, and an upper end surface of the wedge block 10 inclines upwards from front to rear.

In order to enhance the stability of the connection between the main body 1 and longitudinal beams 33 of a front subframe, and to ensure that after the longitudinal beams 33 fracture, the main body 1 can move together with middle segments 332 of the longitudinal beams 33, a first mounting point 121 is formed between the housing mounting base 11 and the wedge block 10, and a second mounting point 122 is formed at an end of the housing mounting base 11 away from the wedge block 10.

In the present embodiment, during mounting, bolts pass through the two first mounting points 121 and the two second mounting points 122, and are in threaded connection with the longitudinal beams 33 to complete the connection between the steering gear housing and the subframe.

Upon a collision, the front crossbeam 31 of the front subframe is driven to move rearward, thereby applying a compressive force to the longitudinal beam 33. As a result, the longitudinal beam 33 fractures at a pre-weakened front section 3310 and a pre-weakened rear section 3330, forming a front segment 331, a middle segment 332, and a rear beam 333. The middle segment 332 drives the steering gear housing to move downward, while the front crossbeam 31 drives the two front segments 331 to move rearward until fracture surfaces of the front segments 331 abut against the wedge block 10. The front segments 331 then slide rearward and upward along an inclined upper end surface of the wedge block 10.

### Embodiment 3:

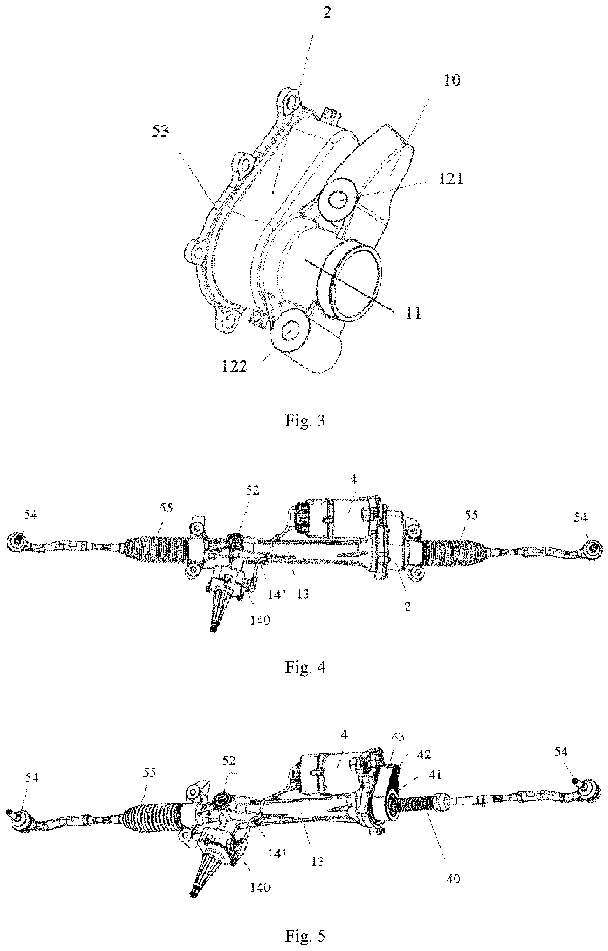

As shown in Fig. 1 to Fig. 3, and Fig. 6, a steering gear housing of the present disclosure includes a main body 1, wherein both ends of the main body 1 are provided with housing mounting bases 11, a wedge block 10 is fixedly arranged on a side of each housing mounting base 11 facing a front crossbeam 31, and an upper end surface of the wedge block 10 inclines upwards from front to rear.

In order to enhance the stability of the connection between the main body 1 and longitudinal beams 33 of a front subframe, and to ensure that after the longitudinal beams 33 fracture, the main body 1 can move together with middle segments 332 of the longitudinal beams 33, a first mounting point 121 is formed between the housing mounting base 11 and the wedge block 10, and a second mounting point 122 is formed at an end of the housing mounting base 11 away from the wedge block 10.

The main body 1 includes a manual side housing 13 and a power assist-side housing 2. An electric motor mounting base 21 is fixedly arranged on a side of the manual side housing 13 close to the power assist-side housing 2, and the power assist-side housing 2 is detachably mounted on the electric motor mounting base 21. One of the housing mounting bases 11 is located on the manual side housing 13, and the other of the housing mounting bases 11 is located on the power assist-side housing 2. The manual side housing 13 and the power assist-side housing 2 jointly form the main body 1. Through the cooperation between the electric motor mounting base 21 and the power assist-side housing 2, mounting positions are reserved for an electric motor 4, a ball nut 41, a pulley 42, and a belt 43, thereby offering improved practicality.

In the present embodiment, during mounting, a ball screw 40 is mounted within the manual side housing 13 in a rotatable way, and the electric motor 4, the ball nut 41, the pulley 42, and the belt 43 are mounted accordingly. Subsequently, the power assist-side housing 2 is mounted onto the manual side housing 13, thereby jointly forming the steering gear housing and providing protection for the ball nut 41, the pulley 42, and the belt 43.

Then, bolts pass through the two first mounting points 121 and the two second mounting points 122, and are in threaded connection with the longitudinal beams 33 to complete the connection between the steering gear housing and the subframe.

Upon a collision, the front crossbeam 31 of the front subframe is driven to move rearward, thereby applying a compressive force to the longitudinal beam 33. As a result, the longitudinal beam 33 fractures at a pre-weakened front section 3310 and a pre-weakened rear section 3330, forming a front segment 331, a middle segment 332, and a rear beam 333. The middle segment 332 drives the steering gear housing to move downward, while the front crossbeam 31 drives the two front segments 331 to move rearward until fracture surfaces of the front segments 331 abut against the wedge block 10. The front segments 331 then slide rearward and upward along an inclined upper end surface of the wedge block 10.

### Embodiment 4:

As shown in Fig. 1 to Fig. 6, an automobile steering gear of the present disclosure includes a steering gear housing. The steering gear housing includes a main body 1, wherein both ends of the main body 1 are provided with housing mounting bases 11, a wedge block 10 is fixedly arranged on a side of each housing mounting base 11 facing a front crossbeam 31, and an upper end surface of the wedge block 10 inclines upwards from front to rear.

In order to enhance the stability of the connection between the main body 1 and longitudinal beams 33 of a front subframe, and to ensure that after the longitudinal beams 33 fracture, the main body 1 can move together with middle segments 332 of the longitudinal beams 33, a first mounting point 121 is formed between the housing mounting base 11 and the wedge block 10, and a second mounting point 122 is formed at an end of the housing mounting base 11 away from the wedge block 10.

The main body 1 includes a manual side housing 13 and a power assist-side housing 2. An electric motor mounting base 21 is fixedly arranged on a side of the manual side housing 13 close to the power assist-side housing 2, and the power assist-side housing 2 is detachably mounted on the electric motor mounting base 21. One of the housing mounting bases 11 is located on the manual side housing 13, and the other of the housing mounting bases 11 is located on the power assist-side housing 2. The manual side housing 13 and the power assist-side housing 2 jointly form the main body 1. Through the cooperation between the electric motor mounting base 21 and the power assist-side housing 2, mounting positions are reserved for an electric motor 4, a ball nut 41, a pulley 42, and a belt 43, thereby offering improved practicality.

In the present embodiment, during mounting, a ball screw 40 is mounted within the manual side housing 13 in a rotatable way, and the electric motor 4, the ball nut 41, the pulley 42, and the belt 43 are mounted accordingly. Subsequently, the power assist-side housing 2 is mounted onto the manual side housing 13, thereby jointly forming the steering gear housing and providing protection for the ball nut 41, the pulley 42, and the belt 43.

Then, bolts pass through the two first mounting points 121 and the two second mounting points 122, and are in threaded connection with the longitudinal beams 33 to complete the connection between the steering gear housing and the subframe.

Upon a collision, the front crossbeam 31 of the front subframe is driven to move rearward, thereby applying a compressive force to the longitudinal beam 33. As a result, the longitudinal beam 33 fractures at a pre-weakened front section 3310 and a pre-weakened rear section 3330, forming a front segment 331, a middle segment 332, and a rear beam 333. The middle segment 332 drives the steering gear housing to move downward, while the front crossbeam 31 drives the two front segments 331 to move rearward until fracture surfaces of the front segments 331 abut against the wedge block 10. The front segments 331 then slide rearward and upward along an inclined upper end surface of the wedge block 10.

### Embodiment 5:

As shown in Fig. 1 to Fig. 6, an automobile steering gear of the present disclosure includes a steering gear housing. The steering gear housing includes a main body 1 and an electric motor 4, wherein both ends of the main body 1 are provided with housing mounting bases 11, a wedge block 10 is fixedly arranged on a side of each housing mounting base 11 facing a front crossbeam 31, and an upper end surface of the wedge block 10 inclines upwards from front to rear.

In order to enhance the stability of the connection between the main body 1 and longitudinal beams 33 of a front subframe, and to ensure that after the longitudinal beams 33 fracture, the main body 1 can move together with middle segments 332 of the longitudinal beams 33, a first mounting point 121 is formed between the housing mounting base 11 and the wedge block 10, and a second mounting point 122 is formed at an end of the housing mounting base 11 away from the wedge block 10.

The main body 1 includes a manual side housing 13 and a power assist-side housing 2. An electric motor mounting base 21 is fixedly arranged on a side of the manual side housing 13 close to the power assist-side housing 2, and the power assist-side housing 2 is detachably mounted on the electric motor mounting base 21. One of the housing mounting bases 11 is located on the manual side housing 13, and the other of the housing mounting bases 11 is located on the power assist-side housing 2. The manual side housing 13 and the power assist-side housing 2 jointly form the main body 1. Through the cooperation between the electric motor mounting base 21 and the power assist-side housing 2, mounting positions are reserved for the electric motor 4, a ball nut 41, a pulley 42, and a belt 43, thereby offering improved practicality.

A shaft hole 211 is formed in the electric motor mounting base 21, the electric motor 4 is mounted on the electric motor mounting base 21, a power output shaft of the electric motor 4 passes through the shaft hole 211 and then is mounted with the pulley 42, a ball screw 40 passes through the manual side housing 13, the ball nut 41 is in threaded connection with the ball screw 40, the belt 43 is wound between the pulley 42 and the ball nut 41, and the ball nut 41, the pulley 42, and the belt 43 are all located within the power assist-side housing 2.

In the present embodiment, during mounting, the ball screw 40 is mounted within the manual side housing 13 in a rotatable way, the ball nut 41 is in threaded connection with the ball screw 40, and the electric motor 4 is mounted on the electric motor mounting base 21, such that the power output shaft of the electric motor 4 passes through the shaft hole 211, and then is mounted with the pulley 42. The belt 43 is wound between the pulley 42 and the ball nut 41. Subsequently, the power assist-side housing 2 is mounted onto the manual side housing 13, thereby jointly forming the steering gear housing and providing protection for the ball nut 41, the pulley 42, and the belt 43.

Then, bolts pass through the two first mounting points 121 and the two second mounting points 122, and are in threaded connection with the longitudinal beams 33 to complete the connection between the steering gear housing and the subframe.

Upon a collision, the front crossbeam 31 of the front subframe is driven to move rearward, thereby applying a compressive force to the longitudinal beam 33. As a result, the longitudinal beam 33 fractures at a pre-weakened front section 3310 and a pre-weakened rear section 3330, forming a front segment 331, a middle segment 332, and a rear beam 333. The middle segment 332 drives the steering gear housing to move downward, while the front crossbeam 31 drives the two front segments 331 to move rearward until fracture surfaces of the front segments 331 abut against the wedge block 10. The front segments 331 then slide rearward and upward along an inclined upper end surface of the wedge block 10.

### Embodiment 6:

As shown in Fig. 1 to Fig. 6, an automobile steering gear of the present disclosure includes a steering gear housing. The steering gear housing includes a main body 1 and an electric motor 4, wherein both ends of the main body 1 are provided with housing mounting bases 11, a wedge block 10 is fixedly arranged on a side of each housing mounting base 11 facing a front crossbeam 31, and an upper end surface of the wedge block 10 inclines upwards from front to rear.

In order to enhance the stability of the connection between the main body 1 and longitudinal beams 33 of a front subframe, and to ensure that after the longitudinal beams 33 fracture, the main body 1 can move together with middle segments 332 of the longitudinal beams 33, a first mounting point 121 is formed between the housing mounting base 11 and the wedge block 10, and a second mounting point 122 is formed at an end of the housing mounting base 11 away from the wedge block 10.

The main body 1 includes a manual side housing 13 and a power assist-side housing 2. An electric motor mounting base 21 is fixedly arranged on a side of the manual side housing 13 close to the power assist-side housing 2, and the power assist-side housing 2 is detachably mounted on the electric motor mounting base 21. One of the housing mounting bases 11 is located on the manual side housing 13, and the other of the housing mounting bases 11 is located on the power assist-side housing 2. The manual side housing 13 and the power assist-side housing 2 jointly form the main body 1. Through the cooperation between the electric motor mounting base 21 and the power assist-side housing 2, mounting positions are reserved for the electric motor 4, a ball nut 41, a pulley 42, and a belt 43, thereby offering improved practicality.

To reduce friction between a ball screw 40 and the ball nut 41, balls are arranged between the ball screw 40 and the ball nut 41, and the ball screw 40, the ball nut 41, and the balls form a ball screw nut assembly.

A shaft hole 211 is formed in the electric motor mounting base 21, the electric motor 4 is mounted on the electric motor mounting base 21, a power output shaft of the electric motor 4 passes through the shaft hole 211 and then is mounted with the pulley 42, the ball screw 40 passes through the manual side housing 13, the ball nut 41 is in threaded connection with the ball screw 40, the belt 43 is wound between the pulley 42 and the ball nut 41, and the ball nut 41, the pulley 42, and the belt 43 are all located within the power assist-side housing 2.

In the present embodiment, during mounting, the ball nut 41 is in threaded connection with the ball screw 40 to form the ball screw nut assembly, the ball screw nut assembly is mounted within the manual side housing 13 in a rotatable way, and the electric motor 4 is mounted on the electric motor mounting base 21, such that the power output shaft of the electric motor 4 passes through the shaft hole 211, and then is mounted with the pulley 42. The belt 43 is wound between the pulley 42 and the ball nut 41. Subsequently, the power assist-side housing 2 is mounted onto the manual side housing 13, thereby jointly forming the steering gear housing and providing protection for the ball nut 41, the pulley 42, and the belt 43.

Then, bolts pass through the two first mounting points 121 and the two second mounting points 122, and are in threaded connection with the longitudinal beams 33 to complete the connection between the steering gear housing and the subframe.

Upon a collision, the front crossbeam 31 of the front subframe is driven to move rearward, thereby applying a compressive force to the longitudinal beam 33. As a result, the longitudinal beam 33 fractures at a pre-weakened front section 3310 and a pre-weakened rear section 3330, forming a front segment 331, a middle segment 332, and a rear beam 333. The middle segment 332 drives the steering gear housing to move downward, while the front crossbeam 31 drives the two front segments 331 to move rearward until fracture surfaces of the front segments 331 abut against the wedge block 10. The front segments 331 then slide rearward and upward along an inclined upper end surface of the wedge block 10.

### Embodiment 7:

As shown in Fig. 1 to Fig. 6, an automobile steering gear of the present disclosure includes a steering gear housing. The steering gear housing includes a main body 1 and an electric motor 4, wherein both ends of the main body 1 are provided with housing mounting bases 11, a wedge block 10 is fixedly arranged on a side of each housing mounting base 11 facing a front crossbeam 31, and an upper end surface of the wedge block 10 inclines upwards from front to rear.

In order to enhance the stability of the connection between the main body 1 and longitudinal beams 33 of a front subframe, and to ensure that after the longitudinal beams 33 fracture, the main body 1 can move together with middle segments 332 of the longitudinal beams 33, a first mounting point 121 is formed between the housing mounting base 11 and the wedge block 10, and a second mounting point 122 is formed at an end of the housing mounting base 11 away from the wedge block 10.

The main body 1 includes a manual side housing 13 and a power assist-side housing 2. An electric motor mounting base 21 is fixedly arranged on a side of the manual side housing 13 close to the power assist-side housing 2, and the power assist-side housing 2 is detachably mounted on the electric motor mounting base 21. One of the housing mounting bases 11 is located on the manual side housing 13, and the other of the housing mounting bases 11 is located on the power assist-side housing 2. The manual side housing 13 and the power assist-side housing 2 jointly form the main body 1. Through the cooperation between the electric motor mounting base 21 and the power assist-side housing 2, mounting positions are reserved for the electric motor 4, a ball nut 41, a pulley 42, and a belt 43, thereby offering improved practicality.

To reduce friction between a ball screw 40 and the ball nut 41, balls are arranged between the ball screw 40 and the ball nut 41, and the ball screw 40, the ball nut 41, and the balls form a ball screw nut assembly.

A shaft hole 211 is formed in the electric motor mounting base 21, the electric motor 4 is mounted on the electric motor mounting base 21, a power output shaft of the electric motor 4 passes through the shaft hole 211 and then is mounted with the pulley 42 through a spline, the ball screw 40 passes through the manual side housing 13, the ball nut 41 is in threaded connection with the ball screw 40, the belt 43 is wound between the pulley 42 and the ball nut 41, and the ball nut 41, the pulley 42, and the belt 43 are all located within the power assist-side housing 2.

In the present embodiment, during mounting, the ball nut 41 is in threaded connection with the ball screw 40 to form the ball screw nut assembly, the ball screw nut assembly is mounted within the manual side housing 13 in a rotatable way, and the electric motor 4 is mounted on the electric motor mounting base 21, such that the power output shaft of the electric motor 4 passes through the shaft hole 211, and then is mounted with the pulley 42 through the spline. The belt 43 is wound between the pulley 42 and the ball nut 41. Subsequently, the power assist-side housing 2 is mounted onto the manual side housing 13, thereby jointly forming the steering gear housing and providing protection for the ball nut 41, the pulley 42, and the belt 43.

Then, bolts pass through the two first mounting points 121 and the two second mounting points 122, and are in threaded connection with the longitudinal beams 33 to complete the connection between the steering gear housing and the subframe.

Upon a collision, the front crossbeam 31 of the front subframe is driven to move rearward, thereby applying a compressive force to the longitudinal beam 33. As a result, the longitudinal beam 33 fractures at a pre-weakened front section 3310 and a pre-weakened rear section 3330, forming a front segment 331, a middle segment 332, and a rear beam 333. The middle segment 332 drives the steering gear housing to move downward, while the front crossbeam 31 drives the two front segments 331 to move rearward until fracture surfaces of the front segments 331 abut against the wedge block 10. The front segments 331 then slide rearward and upward along an inclined upper end surface of the wedge block 10.

### Embodiment 8:

As shown in Fig. 1 to Fig. 6, an automobile steering gear of the present disclosure includes a steering gear housing. The steering gear housing includes a main body 1 and an electric motor 4, wherein both ends of the main body 1 are provided with housing mounting bases 11, a wedge block 10 is fixedly arranged on a side of each housing mounting base 11 facing a front crossbeam 31, and an upper end surface of the wedge block 10 inclines upwards from front to rear.

In order to enhance the stability of the connection between the main body 1 and longitudinal beams 33 of the front subframe, and to ensure that after the longitudinal beams 33 fracture, the main body 1 can move together with middle segments 332 of the longitudinal beams 33, a first mounting point 121 is formed between the housing mounting base 11 and the wedge block 10, and a second mounting point 122 is formed at an end of the housing mounting base 11 away from the wedge block 10.

The main body 1 includes a manual side housing 13 and a power assist-side housing 2. An electric motor mounting base 21 is fixedly arranged on a side of the manual side housing 13 close to the power assist-side housing 2, and the power assist-side housing 2 is detachably mounted on the electric motor mounting base 21. One of the housing mounting bases 11 is located on the manual side housing 13, and the other of the housing mounting bases 11 is located on the power assist-side housing 2. The manual side housing 13 and the power assist-side housing 2 jointly form the main body 1. Through the cooperation between the electric motor mounting base 21 and the power assist-side housing 2, mounting positions are reserved for the electric motor 4, a ball nut 41, a pulley 42, and a belt 43, thereby offering improved practicality.

A sensor mounting base 14 is fixedly arranged on the manual side housing 13, a sensor 140 for detecting a driver steering signal is mounted on the sensor mounting base 14, and a sensor wire harness 141 for signal transmission is mounted between the sensor 140 and the electric motor 4.

To reduce friction between a ball screw 40 and the ball nut 41, balls are arranged between the ball screw 40 and the ball nut 41, and the ball screw 40, the ball nut 41, and the balls form a ball screw nut assembly.

A shaft hole 211 is formed in the electric motor mounting base 21, the electric motor 4 is mounted on the electric motor mounting base 21, a power output shaft of the electric motor 4 passes through the shaft hole 211 and then is mounted with the pulley 42 through a spline, the ball screw 40 passes through the manual side housing 13, the ball nut 41 is in threaded connection with the ball screw 40, the belt 43 is wound between the pulley 42 and the ball nut 41, and the ball nut 41, the pulley 42, and the belt 43 are all located within the power assist-side housing 2.

In the present embodiment, during mounting, the ball nut 41 is in threaded connection with the ball screw 40 to form the ball screw nut assembly, the ball screw nut assembly is mounted within the manual side housing 13 in a rotatable way, and the electric motor 4 is mounted on the electric motor mounting base 21, such that the power output shaft of the electric motor 4 passes through the shaft hole 211, and then is mounted with the pulley 42 through the spline. The belt 43 is wound between the pulley 42 and the ball nut 41. Subsequently, the power assist-side housing 2 is mounted onto the manual side housing 13, thereby jointly forming the steering gear housing and providing protection for the ball nut 41, the pulley 42, and the belt 43.

Then, bolts pass through the two first mounting points 121 and the two second mounting points 122, and are in threaded connection with the longitudinal beams 33 to complete the connection between the steering gear housing and the subframe.

During use, a driver steering signal is detected by the sensor 140 and transmitted to the electric motor 4 via the sensor wire harness 141 to control the rotation of the electric motor 4. Then, the left or right movement of the ball screw 40 is controlled through the ball screw nut assembly, thereby driving the left or right movement of outer tie rod ends 54. The outer tie rod ends 54 are connected to steering knuckles and wheels, thus enabling the deflection of the wheels and ultimately changing the direction of the vehicle.

Upon a collision, the front crossbeam 31 of the front subframe is driven to move rearward, thereby applying a compressive force to the longitudinal beam 33. As a result, the longitudinal beam 33 fractures at a pre-weakened front section 3310 and a pre-weakened rear section 3330, forming a front segment 331, a middle segment 332, and a rear beam 333. The middle segment 332 drives the steering gear housing to move downward, while the front crossbeam 31 drives the two front segments 331 to move rearward until fracture surfaces of the front segments 331 abut against the wedge block 10. The front segments 331 then slide rearward and upward along an inclined upper end surface of the wedge block 10.

### Embodiment 9:

As shown in Fig. 1 to Fig. 6, an automobile steering gear of the present disclosure includes a steering gear housing. The steering gear housing includes a main body 1 and an electric motor 4, wherein both ends of the main body 1 are provided with housing mounting bases 11, a wedge block 10 is fixedly arranged on a side of each housing mounting base 11 facing a front crossbeam 31, and an upper end surface of the wedge block 10 inclines upwards from front to rear.

In order to enhance the stability of the connection between the main body 1 and longitudinal beams 33 of the front subframe, and to ensure that after the longitudinal beams 33 fracture, the main body 1 can move together with middle segments 332 of the longitudinal beams 33, a first mounting point 121 is formed between the housing mounting base 11 and the wedge block 10, and a second mounting point 122 is formed at an end of the housing mounting base 11 away from the wedge block 10.

The main body 1 includes a manual side housing 13 and a power assist-side housing 2. An electric motor mounting base 21 is fixedly arranged on a side of the manual side housing 13 close to the power assist-side housing 2, a mounting cover 53 is fixedly arranged on the power assist-side housing 2, and the mounting cover 53 is fixedly connected to the electric motor mounting base 21 through seven bolts, thereby achieving the assembly of the manual side housing 13 and the power assist-side housing 2 into an integrated housing. One of the housing mounting bases 11 is located on the manual side housing 13, and the other of the housing mounting bases 11 is located on the power assist-side housing 2. The manual side housing 13 and the power assist-side housing 2 jointly form the main body 1. Through the cooperation between the electric motor mounting base 21 and the power assist-side housing 2, mounting positions are reserved for the electric motor 4, a ball nut 41, a pulley 42, and a belt 43, thereby offering improved practicality.

A sensor mounting base 14 is fixedly arranged on the manual side housing 13, a sensor 140 for detecting a driver steering signal is mounted on the sensor mounting base 14, and a sensor wire harness 141 for signal transmission is mounted between the sensor 140 and the electric motor 4.

A mechanism mounting base 51 is fixedly arranged on the manual side housing 13, and an adjustment mechanism 52 for adjusting a gear-rack clearance is mounted on the mechanism mounting base 51.

To reduce friction between a ball screw 40 and the ball nut 41, balls are arranged between the ball screw 40 and the ball nut 41, and the ball screw 40, the ball nut 41, and the balls form a ball screw nut assembly.

A shaft hole 211 is formed in the electric motor mounting base 21, the electric motor 4 is mounted on the electric motor mounting base 21 of the manual side housing 13 through three bolts, a power output shaft of the electric motor 4 passes through the shaft hole 211 and then is mounted with a pulley 42 through a spline, the ball screw 40 passes through the manual side housing 13, the ball nut 41 is in threaded connection with the ball screw 40, the belt 43 is wound between the pulley 42 and the ball nut 41, and the ball nut 41, the pulley 42, and the belt 43 are all located within the power assist-side housing 2.

To prevent the ingress of water, mud, and other debris into the steering gear, both ends of the ball screw 40 are in threaded connection with outer tie rod ends 54 on both sides of the main body 1. Bellows dust boots 55 are sleeved over both ends of the ball screw 40. Small ends of the bellows dust boots 55 are fixedly connected to the outer tie rod ends 54, while large ends of the two bellows dust boots 55 are fixedly connected to the manual side housing 13 and the power assist-side housing 2 respectively.

In the present embodiment, during mounting, the ball nut 41 is in threaded connection with the ball screw 40 to form the ball screw nut assembly, the ball screw nut assembly is mounted within the manual side housing 13 in a rotatable way, and the electric motor 4 is mounted on the electric motor mounting base 21, such that the power output shaft of the electric motor 4 passes through the shaft hole 211, and then is mounted with the pulley 42 through the spline. The belt 43 is wound between the pulley 42 and the ball nut 41. Subsequently, the power assist-side housing 2 is mounted onto the manual side housing 13, thereby jointly forming the steering gear housing and providing protection for the ball nut 41, the pulley 42, and the belt 43.

Then, bolts pass through the two first mounting points 121 and the two second mounting points 122, and are in threaded connection with the longitudinal beams 33 to complete the connection between the steering gear housing and the subframe.

During use, a driver steering signal is detected by the sensor 140 and transmitted to the electric motor 4 via the sensor wire harness 141 to control the rotation of the electric motor 4. Then, the left or right movement of the ball screw 40 is controlled through the ball screw nut assembly, thereby driving the left or right movement of the outer tie rod ends 54. The outer tie rod ends 54 are connected to steering knuckles and wheels, thus enabling the deflection of the wheels and ultimately changing the direction of the vehicle.

Upon a collision, the front crossbeam 31 of the front subframe is driven to move rearward, thereby applying a compressive force to the longitudinal beam 33. As a result, the longitudinal beam 33 fractures at a pre-weakened front section 3310 and a pre-weakened rear section 3330, forming a front segment 331, a middle segment 332, and a rear beam 333. The middle segment 332 drives the steering gear housing to move downward, while the front crossbeam 31 drives the two front segments 331 to move rearward until fracture surfaces of the front segments 331 abut against the wedge block 10. The front segments 331 then slide rearward and upward along an inclined upper end surface of the wedge block 10.

### Embodiment 10:

As shown in Fig. 1 to Fig. 3, and Fig. 6, a front subframe of the present disclosure includes a steering gear housing. The steering gear housing includes a main body 1 and a frame body 3; both ends of the main body 1 are provided with housing mounting bases 11, a wedge block 10 is fixedly arranged on a side of each housing mounting base 11 facing a front crossbeam 31, and an upper end surface of the wedge block 10 inclines upwards from front to rear.

The frame body 3 includes a front crossbeam 31, a rear crossbeam 32, and two longitudinal beams 33, each longitudinal beam 33 sequentially includes a front segment 331, a middle segment 332, and a rear beam 333 from front to rear, the front segment 331, the middle segment 332, and the rear beam 333 are integrally formed, a pre-weakened front section 3310 is arranged between the front segment 331 and the middle segment 332, a pre-weakened rear section 3330 is arranged between the middle segment 332 and the rear beam 333, and the housing mounting base 11 is mounted on the middle segment 332. In order to guide the rearward movement of the front segment 331 of the longitudinal beam 33 by means of the wedge block 10 and then facilitate the preferential fracture of the longitudinal beam 33 at the pre-weakened front section 3310, the front end of the wedge block 10 abuts against the pre-weakened front section 3310.

In order to enhance a connection strength between middle segments 332 of the two longitudinal beams 33, a middle crossbeam 34 is mounted between the two middle segments 332.

In order to enhance the stability of the connection between the main body 1 and the longitudinal beams 33 of the front subframe, and to ensure that after the longitudinal beams 33 fracture, the main body 1 can move together with the middle segments 332 of the longitudinal beams 33, a first mounting point 121 is formed between the housing mounting base 11 and the wedge block 10, and a second mounting point 122 is formed at an end of the housing mounting base 11 away from the wedge block 10.

The main body 1 includes a manual side housing 13 and a power assist-side housing 2. An electric motor mounting base 21 is fixedly arranged on a side of the manual side housing 13 close to the power assist-side housing 2, and the power assist-side housing 2 is detachably mounted on the electric motor mounting base 21. One of the housing mounting bases 11 is located on the manual side housing 13, and the other of the housing mounting bases 11 is located on the power assist-side housing 2. The manual side housing 13 and the power assist-side housing 2 jointly form the main body 1. Through the cooperation between the electric motor mounting base 21 and the power assist-side housing 2, mounting positions are reserved for an electric motor 4, a ball nut 41, a pulley 42, and a belt 43, thereby offering improved practicality.

In the present embodiment, during mounting, a ball screw 40 is mounted within the manual side housing 13 in a rotatable way, and the electric motor 4, the ball nut 41, the pulley 42, and the belt 43 are mounted accordingly. Subsequently, the power assist-side housing 2 is mounted onto the manual side housing 13, thereby jointly forming the steering gear housing and providing protection for the ball nut 41, the pulley 42, and the belt 43.

Then, bolts pass through the two first mounting points 121 and the two second mounting points 122, and are in threaded connection with the longitudinal beams 33 to complete the connection between the steering gear housing and the subframe.

Upon a collision, the front crossbeam 31 of the front subframe is driven to move rearward, thereby applying a compressive force to the longitudinal beam 33. As a result, the longitudinal beam 33 fractures at the pre-weakened front section 3310 and the pre-weakened rear section 3330, forming the front segment 331, the middle segment 332, and the rear beam 333. The middle segment 332 drives the steering gear housing to move downward, while the front crossbeam 31 drives the two front segments 331 to move rearward until fracture surfaces of the front segments 331 abut against the wedge block 10. The front segments 331 then slide rearward and upward along an inclined upper end surface of the wedge block 10.

### Embodiment 11:

As shown in Fig. 1 to Fig. 3, and Fig. 6, an automobile of the present disclosure includes a front subframe. The front subframe includes a steering gear housing. The steering gear housing includes a main body 1 and a frame body 3, wherein both ends of the main body 1 are provided with housing mounting bases 11, a wedge block 10 is fixedly arranged on a side of each housing mounting base 11 facing a front crossbeam 31, and an upper end surface of the wedge block 10 inclines upwards from front to rear.

The frame body 3 includes the front crossbeam 31, a rear crossbeam 32, and two longitudinal beams 33, each longitudinal beam 33 sequentially includes a front segment 331, a middle segment 332, and a rear beam 333 from front to rear, the front segment 331, the middle segment 332, and the rear beam 333 are integrally formed, a pre-weakened front section 3310 is arranged between the front segment 331 and the middle segment 332, a pre-weakened rear section 3330 is arranged between the middle segment 332 and the rear beam 333, and the housing mounting base 11 is mounted on the middle segment 332. In order to guide the rearward movement of the front segment 331 of the longitudinal beam 33 by means of the wedge block 10 and then facilitate the preferential fracture of the longitudinal beam 33 at the pre-weakened front section 3310, the front end of the wedge block 10 abuts against the pre-weakened front section 3310.

In order to enhance a connection strength between the middle segments 332 of the two longitudinal beams 33, a middle crossbeam 34 is mounted between the two middle segments 332.

In order to enhance the stability of the connection between the main body 1 and the longitudinal beams 33 of the front subframe, and to ensure that after the longitudinal beams 33 fracture, the main body 1 can move together with the middle segments 332 of the longitudinal beams 33, a first mounting point 121 is formed between the housing mounting base 11 and the wedge block 10, and a second mounting point 122 is formed at an end of the housing mounting base 11 away from the wedge block 10.

The main body 1 includes a manual side housing 13 and a power assist-side housing 2. An electric motor mounting base 21 is fixedly arranged on a side of the manual side housing 13 close to the power assist-side housing 2, and the power assist-side housing 2 is detachably mounted on the electric motor mounting base 21. One of the housing mounting bases 11 is located on the manual side housing 13, and the other of the housing mounting bases 11 is located on the power assist-side housing 2. The manual side housing 13 and the power assist-side housing 2 jointly form the main body 1. Through the cooperation between the electric motor mounting base 21 and the power assist-side housing 2, mounting positions are reserved for an electric motor 4, a ball nut 41, a pulley 42, and a belt 43, thereby offering improved practicality.

In the present embodiment, during mounting, a ball screw 40 is mounted within the manual side housing 13 in a rotatable way, and the electric motor 4, the ball nut 41, the pulley 42, and the belt 43 are mounted accordingly. Subsequently, the power assist-side housing 2 is mounted onto the manual side housing 13, thereby jointly forming the steering gear housing and providing protection for the ball nut 41, the pulley 42, and the belt 43.

Then, bolts pass through the two first mounting points 121 and the two second mounting points 122, and are in threaded connection with the longitudinal beams 33 to complete the connection between the steering gear housing and the subframe.

Upon a collision, the front crossbeam 31 of the front subframe is driven to move rearward, thereby applying a compressive force to the longitudinal beam 33. As a result, the longitudinal beam 33 fractures at the pre-weakened front section 3310 and the pre-weakened rear section 3330, forming the front segment 331, the middle segment 332, and the rear beam 333. The middle segment 332 drives the steering gear housing to move downward, while the front crossbeam 31 drives the two front segments 331 to move rearward until fracture surfaces of the front segments 331 abut against the wedge block 10. The front segments 331 then slide rearward and upward along an inclined upper end surface of the wedge block 10.

The above describes the steering gear housing, the automobile steering gear, the front subframe, and the automobile provided by the present disclosure in detail. The above embodiments are described only for better understanding of the method and core concepts of the present disclosure. It should be noted that any person skilled in the art can make various modifications and improvements to the present disclosure without departing from the principles of the present disclosure, and such modifications and improvements shall also fall within the protection scope defined by the claims of the present disclosure.

## Claims

1. A steering gear housing, comprising a main body (1), wherein both ends of the main body (1) are provided with housing mounting bases (11), a wedge block (10) is fixedly arranged on a side of each housing mounting base (11) facing a front crossbeam (31), and an upper end surface of the wedge block (10) inclines upwards from front to rear.

2. The steering gear housing according to claim 1, wherein a first mounting point (121) is formed between the housing mounting base (11) and the wedge block (10), and a second mounting point (122) is formed at an end of the housing mounting base (11) away from the wedge block (10).

3. The steering gear housing according to claim 1, wherein the main body (1) comprises a manual side housing (13) and a power assist-side housing (2), an electric motor mounting base (21) is fixedly arranged on a side of the manual side housing (13) close to the power assist-side housing (2), the power assist-side housing (2) is detachably mounted on the electric motor mounting base (21), one of the housing mounting bases (11) is located on the manual side housing (13), and the other of the housing mounting bases is located on the power assist-side housing (2).

4. An automobile steering gear, comprising the steering gear housing according to claim 3.

5. The automobile steering gear according to claim 4, further comprising an electric motor (4), wherein a shaft hole (211) is formed in the electric motor mounting base (21), the electric motor (4) is mounted on the electric motor mounting base (21), a power output shaft of the electric motor (4) passes through the shaft hole (211) and is mounted with a pulley (42), a ball screw (40) passes through the manual side housing (13), a ball nut (41) is in threaded connection with the ball screw (40), a belt (43) is wound between the pulley (42) and the ball nut (41), and the ball nut (41), the pulley (42), and the belt (43) are all located within the power assist-side housing (2).

6. The automobile steering gear according to claim 5, wherein balls are arranged between the ball screw (40) and the ball nut (41), and the ball screw (40), the ball nut (41), and the balls form a ball screw nut assembly.

7. The automobile steering gear according to claim 5, wherein the power output shaft of the electric motor (4) is connected to the pulley (42) via a spline.

8. The automobile steering gear according to claim 5, wherein a sensor mounting base (14) is fixedly arranged on the manual side housing (13), a sensor (140) for detecting a driver steering signal is mounted on the sensor mounting base (14), and a sensor wire harness (141) for signal transmission is mounted between the sensor (140) and the electric motor (4).

9. A front subframe, comprising the steering gear housing according to claim 1.

10. The front subframe according to claim 9, further comprising a frame body (3), wherein the frame body (3) comprises a front crossbeam (31), a rear crossbeam (32), and two longitudinal beams (33), each longitudinal beam (33) sequentially comprises a front segment (331), a middle segment (332), and a rear beam (333) from front to rear, the front segment (331), the middle segment (332), and the rear beam (333) are integrally formed, a pre-weakened front section (3310) is arranged between the front segment (331) and the middle segment (332), a pre-weakened rear section (3330) is arranged between the middle segment (332) and the rear beam (333), the housing mounting base (11) is mounted on the middle segment (332), and a front end of the wedge block (10) abuts against the pre-weakened front section (3310).

11. The front subframe according to claim 10, wherein a middle crossbeam (34) is mounted between the two middle segments (332).

12. An automobile, comprising the front subframe according to any one of claims 9 to 11.
